# EUROPÄISCHE PATENTANMELDUNG

(11) **EP 2 620 590 A2**
(43) Veröffentlichungstag der Anmeldung: **31.07.2013**
(21) Anmeldenummer: 13151311.1
(22) Anmeldetag: 15.01.2013
(51) Int. Cl.: F01D 5/16

(54) **Verfahren und Dämpfungseinrichtung zur Schwingungsdämpfung einer Schaufel einer Strömungsmaschine, sowie Strömungsmaschine**

(30) Priorität: 25.01.2012 DE 102012201048
(71) Anmelder: MTU Aero Engines AG, 80995 München (DE)
(72) Erfinder: Retze, Ulrich, Dr., 82223 Eichenau (DE)

(57) **Zusammenfassung**

Offenbart sind ein Verfahren zur Schwingungsdämpfung zumindest einer Schaufel einer Strömungsmaschine, wobei zuerst zumindest ein Dämpfungselement in Axialrichtung bewegbar an der Schaufel angeordnet wird, das eine größere Permeabilitätszahl als die Schaufel hat (µ_{rD}> µ_{rB}), und dann zur Einstellung der Masse des Dämpfungselementes in Echtzeit ein in Radialrichtung wirkendes Magnetfelds zumindest zeitweise bei einer Rotation einer Rotornabe der Strömungsmaschine erzeugt wird, eine Dämpfungseinrichtung mit einem beispielsweise ferromagnetischen Dämpfungselement sowie mit einer Magnetfeldquelle, und eine Strömungsmaschine.

## Beschreibung

Die Erfindung betrifft ein Verfahrung und eine Dämpfungseinrichtung zur Schwingungsdämpfung zumindest einer Schaufel einer Strömungsmaschine sowie eine Strömungsmaschine mit einer derartigen Dämpfungseinrichtung.

Strömungsmaschinen wie Flugzeugtriebwerke weisen zur Schwingungsdämpfung ihrer Schaufeln häufig ein oder mehrere Dämpfungseinrichtungen auf. So ist es aus dem Patent DE 4 015 206 C1 bekannt, Laufschaufeln eines Schaufelkranzes über ihre Deckbänder miteinander zu verspannen. Hierzu haben die Deckbänder bspw. eine Z-artige Gestalt mit jeweils zwei Kraft-übertragungsflächen zur gegenseitigen mechanischen Kopplung. Aus dem Patent EP 0 511 022 B1 ist es bekannt, Laufschaufeln eines Schaufelkranzes über ein drahtartiges Dämpfungselement miteinander zu verspannen, das durch deren Schaufelblätter geführt ist. Ferner ist es aus der Patentanmeldung EP 1 944 466 A1 bekannt, Dämpfungselemente in Taschen von benachbarten Deckbändern anzuordnen. Bei einer Rotation des Rotors werden die Dämpfungselemente aufgrund der Fliehkraft radial nach außen bewegt und bewirken somit eine mechanische Kopplung der Deckbänder. Zudem ist es bekannt, Dämpfungselemente in Axialrichtung bewegbar in schaufelhalsseitigen Hohlräumen anzuordnen. Die Dämpfungswirkung entsteht aufgrund einer Reibwirkung zwischen dem Dämpfungselement und der jeweiligen Laufschaufel. Oftmals sind allerdings bei geringen Drehzahlen die Anpresskräfte der Dämpfungselemente aufgrund ihrer kleinen Masse zu gering, um eine ausreichende Dämpfungswirkung zu erzielen.

Aufgabe der Erfindung ist es, ein Verfahren zur Schwingungsdämpfung bzw. Verstimmung zumindest einer Schaufel einer Strömungsmaschine zu schaffen, das die vorgenannten Nachteile beseitigt und eine verbesserte Dämpfungswirkung bzw. Verstimmung der zumindest einen Schaufel ermöglicht. Des Weiteren ist es Aufgabe der Erfindung, eine Dämpfungseinrichtung zur wirksamen Schwingungsdämpfung zumindest einer Schaufel einer Strömungsmaschine sowie eine Strömungsmaschine mit einem verbesserten Schwingverhalten zu schaffen.

Die Aufgabe wird gelöst durch ein Verfahren mit den Merkmalen des Patentanspruchs 1, durch eine Dämpfungseinrichtung mit den Merkmalen des Patentanspruchs 9 sowie durch eine Strömungsmaschine mit den Merkmalen des Patentanspruchs 11.

Bei einem erfindungsgemäßen Verfahren zur Schwingungsdämpfung zumindest einer Schaufel einer Strömungsmaschine wird zuerst an der Schaufel zumindest ein Dämpfungselement angeordnet, das eine größere Permeabilitätszahl als die Schaufel hat. Dann wird zumindest zeitweise ein in Radialrichtung wirkendes Magnetfeld bei einer Rotation einer Rotornabe der Strömungsmaschine erzeugt.

Das erfindungsgemäße Verfahren lässt sich sowohl zur Dämpfung bzw. Verstimmung von rotierenden Schaufeln als auch nicht rotierenden Schaufeln einsetzen. Erfindungsgemäß wird die Masse des Dämpfungselements durch das Magnetfeld aktiv und insbesondere variabel eingestellt. Bei dem erfindungsgemäßen Verfahren weist das Dämpfungselement keine definierte Masse auf, sondern die Masse wird entsprechend des zu erzielenden Schwingverhaltens bzw. der zu erzielenden Verstimmung in Echtzeit verändert. Dadurch, dass das zumindest eine Dämpfungselement eine größere Permeabilitätszahl als die zumindest eine Schaufel hat, ist das Dämpfungselement leichter magnetisierbar als die Schaufel. Das Magnetfeld wirkt sich quasi nicht auf die Schaufel aus. Hierdurch kann das Magnetfeld bis auf das Dämpfungselement wirken, wodurch dieses mit einer in Radialrichtung wirkenden Anpresskraft beaufschlagt wird. Da somit eine Reibung in Axialrichtung zwischen dem Dämpfungselement und der Schaufel eingestellt bzw. verändert wird, kann zur Vermeidung von Resonanzen, bspw. bei geringen Drehzahlen, die Dämpfungswirkung verbessert werden. Eine schwingungsdämpfende Impulswirkung des Dämpfungselements bleibt dabei erhalten. Bei Leitschaufeln kann die umfangsbedingte Einbausituation des jeweiligen Dämpfungselements bedingt durch variierende Gravitationskräfte zu unterschiedlichen Wirkweisen der Dämpfungselemente führen. Mittels des angreifenden Magnetfeldes kann dieser Einfluss auf ein Minimum reduziert werden. Neben impulsartigen Kontakten durch die Bewegung des jeweiligen Dämpfungselements kommt es durch Anwendung des erfindungsgemäßen Verfahren auch bei den Leitschaufeln zur Energieabsorption durch Reibung, die im Unterschied zur Anordnung der Dämpfungselemente an Laufschaufeln erst durch den Einsatz des Magnetfeldes aktiviert wird.

Beispielhafte Schaufeln sind Lauf- oder Leitschaufeln eines Flugzeugtriebwerks, die turbinenseitig angeordnet sind. Diese Schaufeln bestehen vornehmlich aus Titan beziehungsweise einer Titanlegierung und weisen somit eine kleine Permeabilitätszahl auf. Das Dämpfungselement, das vorzugsweise aus einem ferromagnetischen Werkstoff wie Eisen besteht, weist eine wesentlich größere Permeabilitätszahl und somit eine wesentlich bessere Magnetisierbarkeit auf. Grundsätzlich lässt sich mittels des erfindungsgemäßen Verfahrens auch eine verdichterseitige Beschaufelung schwingungsdämpfen, jedoch ist hier zu berücksichtigen, dass die Beschaufelung meistens aus einer Nickelbasislegierung besteht, die eine im Vergleich zum Titan verbesserte Magnetisierbarkeit aufweist. Selbstverständlich ist das Verfahren auch bei rotierenden und nicht rotierenden Kunststoffbauteilen beziehungsweise Faserverbundbauteilen und insbesondere auch bei Rotor- oder Propellerblättern anwendbar.

Bevorzugterweise kann das Magnetfeld bei einer Rotation der Rotornabe zu- und abgeschaltet werden. Hierdurch kann durch gezielte Erzeugung des Magnetfeldes in kritischen Drehzahlbereichen eine Dämpfungswirkung erbracht werden, so dass über den gesamten Drehzahlbereich ein optimiertes Schwingverhalten realisiert wird.

Zur weiteren Verbesserung der Dämpfungswirkung ist es vorteilhaft, wenn eine Magnetfeldstärke in Abhängigkeit von einer Drehzahl der Rotornabe variiert werden kann. Das heißt, dass bei steigender Drehzahl das Magnetfeld entsprechend verstärkt wird.

Bei einem Ausführungsbeispiel wirkt das Magnetfeld radial nach innen auf das Dämpfungselement. Hierdurch kann bei Ausführung der zumindest einen Schaufel als Laufschaufel der auf das Dämpfungselement wirkenden Fliehkraft entgegengewirkt werden. Wenn eine der Rotationsachse zugewandte Schaufelfläche als Reibfläche dient, kann die Fliehkraft und somit die Reibwirkung verkleinert werden. Wenn eine von der Rotationsachse abgewandte Schaufelfläche als Reibfläche dient, kann somit die Reibwirkung vergrößert werden.

Bei einem bevorzugten alternativen Ausführungsbeispiel wirkt das Magnetfeld radial nach außen auf das Dämpfungselement. Hierdurch kann bei Ausführung der zumindest einen Schaufel als Laufschaufel die auf das Dämpfungselement wirkende Fliehkraft um die Anpresskraft vergrößert werden. Bei einer der Rotationsachse zugewandten Reibfläche der zumindest einen Schaufel kann so die Reibwirkung vergrößert werden. Wenn eine von der Rotationsachse abgewandte Schaufelfläche als Reibfläche dient, kann somit die Reibwirkung verkleinert werden.

Insbesondere dann, wenn die zumindest eine Schaufel eine Laufschaufel ist und das Magnetfeld radial nach innen auf das Dämpfungselement wirkt, ist es vorteilhaft, wenn das Magnetfeld bei einer Drehbewegung des zumindest einen Dämpfungselementes mit rotiert. Beispielsweise kann die Magnetfeldquelle nabenseitig angeordnet sein. Hierdurch kann eine Magnetfeldquelle zum Erzeugen des Magnetfelds sowohl nah zum Dämpfungselement als auch nah zur Rotationsachse positioniert werden. Dadurch, dass die Magnetfeldquelle nahe zum Dämpfungselement positioniert ist, kann diese leistungsreduziert ausgeführt sein. Dadurch, dass die Magnetfeldquelle nahe zur Rotationsachse positioniert wird, wird ein Einfluss der Magnetfeldquellenmasse auf das Rotationsverhalten der Rotornabe bzw. des Rotors gering gehalten.

Alternativ kann das Magnetfeld lagefixiert sein bzw. stationär ausgebildet sein. Je nach Größe des Magnetfeldes erfolgt entweder eine lokale, temporäre Beaufschlagung des Dämpfungselementes mit dem Magnetfeld oder aber eine kontinuierliche Beaufschlagung. Dabei wird eine kontinuierliche Beaufschlagung bevorzugt, da hierdurch eine konstante Anpresskraft einstellbar ist und Schwankungen der Anpresskraft infolge eines sich immer wieder auf- bzw. abbauenden Magnetfeldes vermieden werden. Beispielsweise kann eine Magnetfeldquelle bei einer Strömungsmaschine statorseitig angeordnet sein und somit die zu dämpfenden Laufschaufeln Lauf- oder Leitschaufeln umgreifen.

Wenn die zumindest eine Schaufel toleranzbehaftet in einer Schaufelaufnahme gelagert ist, ist es vorteilhaft, wenn das Dämpfungselement nahe der Schaufelaufnahme angeordnet wird, da hierdurch die Einspannung stabilisiert wird.

Eine erfindungsgemäße Dämpfungseinrichtung zur Schwingungsdämpfung zumindest einer Schaufel mit einer kleinen Permeabilitätszahl einer Strömungsmaschine hat zumindest ein Dämpfungselement mit einer großen Permeabilitätszahl zur in Axialrichtung bewegbaren Anordnung an der Schaufel, und zumindest eine Magnetfeldquelle zur Erzeugung einer auf das Dämpfungselement in Radialrichtung wirkenden Anpresskraft. Eine derartige Dämpfungseinrichtung ermöglicht die Durchführung des erfindungsgemäßen Verfahrens und somit eine wirksame Schwingungsdämpfung. Bei Verwendung von ferromagnetischen Reibdämpfern als Dämpfungselemente kann deren Effizienz signifikant gesteigert werden.

Bei einem Ausführungsbeispiel ist die Magnetfeldquelle ein Ringmagnet. Der Ringmagnet kann zur Vereinfachung der Montage segmentiert sein. Er kann als ein Elektromagnet oder als ein Dauermagnet ausgeführt sein. Die Ausführung des Ringmagneten als einen Dauermagneten hat den Vorteil, dass zur Schwingungsdämpfung keine Bestromung notwendig ist, wodurch die Montage bzw. Installation der Dämpfungseinrichtung weiter vereinfacht wird.

Eine bevorzugte Strömungsmaschine hat eine erfindungsgemäße Dämpfungseinrichtung wobei Schaufeln zumindest einer Schaufelreihe mit jeweils einem der Dämpfungselemente versehen sind und nabenseitig oder gehäuseseitig eine Magnetfeldquelle angeordnet ist. Eine derartige Strömungsmaschine weist im Vergleich zu herkömmlichen Strömungsmaschinen ein optimiertes Schwingverhalten auf.

Sonstige vorteilhafte Ausführungsbeispiele der Erfindung sind Gegenstand weiterer Unteransprüche.

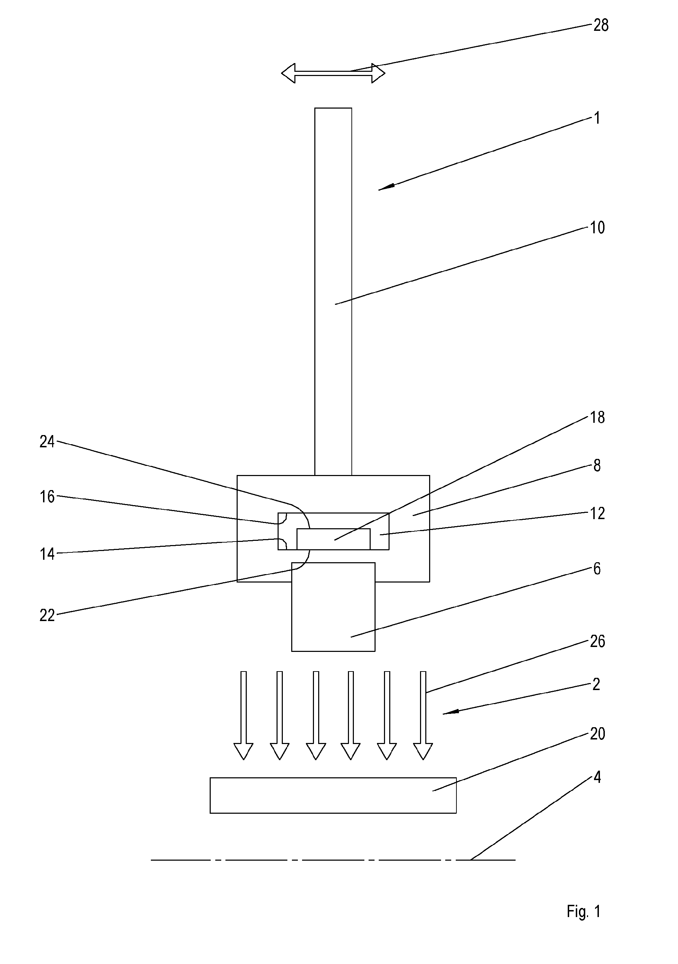

Im Folgenden wird ein Ausführungsbeispiel der Erfindung anhand einer stark vereinfachten schematischen Darstellung näher erläutert. Die einzige Figur 1 ein Ausführungsbeispiel einer erfindungsgemäßen Schwingungsdämpfung.

In Figur 1 ist eine erfindungsgemäße Schwingungsdämpfung einer Laufschaufel 1 mittels einer erfindungsgemäßen Dämpfungseinrichtung 2 gezeigt. Die Laufschaufel 1 ist bspw. eine Laufschaufel einer turbinenseitigen Lauschaufelreihe einer Strömungsmaschine wie ein Flugzeugtriebwerk. Die Laufschaufel 1 steht stellvertretend für sämtliche Laufschaufeln der Laufschaufelreihe und ist an einer um eine Rotationsachse 4 rotierenden Rotornabe (nicht gezeigt) angeordnet.

Die Laufschaufel 1 besteht aus einem Material mit einer kleinen Permeabilitätszahl µ*_{rB}* und ist demgemäß nur sehr schwach magnetisierbar. Ein beispielhaftes Material ist Titan beziehungsweise eine Titanlegierung. Die Laufschaufel 1 hat einen Fuß 6 zur Anordnung in einer Aufnahme an der Nabe, einen Hals 8 sowie ein Blatt 10, das in einem von einer Hauptströmung durchströmten Ringraum angeordnet ist. Zum Ausgleich von Wärmeausdehnungen ist der Schaufelfuß 6 und somit die Laufschaufel 1 toleranzbehaftet in der Aufnahme angeordnet. D. h., im kalten Zustand kann die Laufschaufel 1 kleine Bewegungen in der Aufnahme ausführen. In dem Schaufelhals 8 ist ein Hohlraum 12 mit einem rechteckigen Querschnitt ausgebildet, der eine von der Rotationsachse 4 abgewandte radial innenliegende ebene Bodenfläche 14 und eine der Rotationsachse 4 zugewandte radialaußenliegende ebene Deckenfläche 16 hat.

Die Dämpfungseinrichtung 2 hat ein Dämpfungselement 18 sowie zumindest eine Magnetfeldquelle 20.

Das Dämpfungselement 18 ist in Axialrichtung bewegbar in dem Hohlraum 12 und somit nahe der Laufschaufelaufnahme angeordnet. Vorzugsweise hat es einen rechteckigen Querschnitt mit einer der Bodenfläche 14 zugewandten ebenen Grundfläche 24 und mit einer der Deckenfläche 16 zugewandten Oberfläche 26. Es besteht vorzugsweise aus einem Werkstoff mit einer großen Permeabilitätszahl µ_{rD} und weist somit eine gegenüber der Laufschaufel 1 verbesserte Magnetisierbarkeit auf. Beispielsweise besteht das Dämpfungselement 18 aus einem ferromagnetischen Material wie Eisen.

Die Magnetfeldquelle 20 dient zur Erzeugung eines in Radialrichtung auf das Dämpfungselement 16 wirkenden Magnetfelds 26. Sie ist beispielsweise ein als Ringmagnet ausgeführter Elektromagnet, der zur vereinfachten Montage in einzelne Ringsegmente unterteilt ist. Sie ist in einer Aufnahme der Nabe eingesetzt und somit mit der Laufschaufelreihe mit rotierend gelagert. Zur Beaufschlagung des Dämpfungselements 18 mit einer Anpresskraft, die einer auf das Dämpfungselement 18 bei Rotation wirkenden Fliehkraft entgegen gerichtet ist, ist die Magnetfeldquelle 20 radial innenliegend zum Dämpfungselement 18 angeordnet.

Im Folgenden wird ein bevorzugtes Verfahren der Erfindung näher erläutert. Beispielsweise ist die Dämpfungseinrichtung 2 in einem Flugzeugtriebwerk zur Schwingungsdämpfung der Laufschaufeln 1 einer Laufschaufelreihe vorgesehen. Die Laufschaufeln 1 sind toleranzbehaftet in Aufnahmen einer Nabe eingesetzt und mit jeweils einem Dämpfungselement 18 versehen. Radial innenliegend zu den Dämpfungselementen 18 ist eine als bestrombarer Ringmagnet ausgeführte Magnetfeldquelle 16 angeordnet.

Bei Rotation der Nabe 4 werden die Laufschaufeln 1 jeweils gemäß dem Doppelpfeil 28 in axialer Richtung in Schwingungen versetzt. Die Dämpfungselemente 18 werden aufgrund der Fliehkraft radial nach außen geschleudert und beginnen mit ihren Oberflächen 24 entlang den Deckenflächen 16 zu reiben, die somit als schaufelseitige Reibflächen dienen. Aufgrund der geringen Masse der Dämpfungselemente 18 werden diese jedoch nur mit einer geringen Fliehkraft beaufschlagt, so dass nur eine begrenzte Dämpfungswirkung erzielt wird. Zur Verbesserung der Reibwirkung und somit der Dämpfungswirkung werden zumindest bei niedrigen Drehzahlen die Dämpfungselemente 18 mit einer radial nach innen gerichteten Anpresskraft beaufschlagt. Hierzu wird die Magnetfeldquelle 16 bestromt. Die Magnetfeldquelle 16 erzeugt ein Magnetfeld 26, das aufgrund der kleinen Permeabilitätszahl µ_{rB} der Lauschaufeln 1 quasi nur auf die Dämpfungselemente 18 wirkt. Diese werden nun radial nach innen gezogen bzw. bewegt und somit entgegen der Fliehkraft mit ihren Grundflächen 22 gegen die Bodenflächen 20 gedrückt, die nun als schaufelseitige Reibflächen dienen. Die Reibwirkung steigt und die Dämpfungswirkung wird verbessert. Bei zunehmender Drehzahl wird die Magnetfeldstärke entsprechend angepasst, so dass grundsätzlich auch bei hohen Drehzahlen gegen die Fliehkraft eine Reibwirkung zwischen den Grundflächen 22 und den Bodenflächen 14 möglich ist. Insbesondere wird das Magnetfeld 26 dann erzeugt, wenn in kritischen Drehzahlbereichen der Strömungsmaschine das Schwingverhalten der Laufschaufeln 1 geändert bzw. eine Dämpfungswirkung erbracht werden soll. Nach dem Durchfahren des kritischen Drehzahlbereichs wird die Magnetfeldquelle 20 abgeschaltet, das Magnetfeld 26 bricht zusammen und die Dämpfungselemente 18 werden aufgrund der Fliehkraft radial nach außen gegen die Deckenflächen 16 geschleudert.

Bei einer erfindungsgemäßen Verfahrensvariante, bei der das Magnetfeld 26 ebenfalls gegen die Fliehkraft wirkt, wird das Magnetfeld 26 so eingestellt, dass die Dämpfungselemente 18 zwar an der Deckenfläche 16 reiben, die Reibwirkung jedoch durch das Magnetfeld 26 verkleinert wird. Selbstverständlich sind die beiden vorbeschriebenen Verfahrensvarianten auch kombinierbar.

Bei einer weiteren erfindungsgemäßen Verfahrensvariante wird das Magnetfeld 26 zur Unterstützung bzw. Verstärkung der Fliehkraft eingesetzt. Die Magnetfeldquelle 20 ist statorseitig und somit lagefxiert angeordnet. Insbesondere ist sie radial außenliegend zu den Dämpfungselementen 18 angeordnet. Hierdurch werden die Dämpfungselemente 18 bei Bestromung der Magnetfeldquelle 20 gegen die Deckenfläche 16 des Hohlraums 12 gezogen bzw. gedrückt, wodurch ebenfalls das Schwingverhalten der Laufschaufeln 1 beeinflusst wird.

Grundsätzlich ist die Position des Dämpfungselements 18 an der Laufschaufel 1 oder einer Leitschaufel frei. So kann das Dämpfungselement 18 wie vorbeschrieben drehachsennah angeordnet sein. Alternativ kann es jedoch auch drehachsenfern an der Schaufel 1 gelagert sein, bspw. an einem freien Körperabschnitt der Schaufel 1. Zudem kann das Dämpfungselement 16 auch einem schwingbaren Schaufelabschnitt lagefixiert sein, wobei durch Beaufschlagung des Dämpfungselementes 18 mit dem Magnetfeld 26 der schwingbare Schaufelabschnitt stabilisiert wird, was sich dann auf das Schwingverhalten der gesamten Schaufel 1 auswirkt.

Ferner sei erwähnt, dass sich bei einer Schaufel 1 aus verschiedenen Materialen die Permeabilitätszahl (µ_{rB}) der Schaufel 1 auf den Schaufelabschnitt bezieht, an dem das Dämpfungselement 18 angeordnet ist.

Offenbart sind ein Verfahren zur Schwingungsdämpfung zumindest einer Schaufel einer Strömungsmaschine, wobei zuerst zumindest ein Dämpfungselement in Axialrichtung bewegbar an der Schaufel angeordnet wird, das eine größere Permeabilitätszahl als die Schaufel hat (µ_{rD}> µ_{rB}), und dann zur Einstellung der Masse des Dämpfungselementes in Echtzeit ein in Radialrichtung wirkendes Magnetfelds zumindest zeitweise bei einer Rotation einer Rotornabe der Strömungsmaschine erzeugt wird, eine Dämpfungseinrichtung mit einem beispielsweise ferromagnetischen Dämpfungselement sowie mit einer Magnetfeldquelle, und eine Strömungsmaschine.

### Bezugszeichenliste

- 1: Laufschaufel
- 2: Dämpfungseinrichtung
- 4: Rotationsachse
- 6: Fuß
- 8: Hals
- 10: Blatt
- 12: Hohlraum
- 14: Bodenfläche
- 16: Deckenfläche
- 18: Dämpfungselement
- 20: Magnetfeldquelle
- 22: Grundfläche
- 24: Oberfläche
- 26: Magnetfeld
- 28: Schwingungsrichtung

- µ_{rB}: Permeabilitätszahl Schaufel
- µ_{rD}: Permeabilitätszahl Dämpfungselement

## Patentansprüche

1. Verfahren zur Schwingungsdämpfung zumindest einer Schaufel (1) einer Strömungsmaschine, mit den Schritten:
- Anordnen zumindest eines Dämpfungselements (18) in Axialrichtung bewegbar an der Schaufel (1), das eine größere Permeabilitätszahl (µ_{rD}) als die Schaufel (1) hat,
- Erzeugen eines in Radialrichtung wirkenden Magnetfelds (26) zumindest zeitweise bei einer Rotation einer Rotornabe der Strömungsmaschine.

2. Verfahren nach einem der vorhergehenden Ansprüche, wobei das Magnetfeld (26) bei der Rotation der Rotornabe zu- und abgeschaltet wird.

3. Verfahren nach einem der vorhergehenden Ansprüche, wobei eine Magnetfeldstärke in Abhängigkeit von einer Drehzahl der Rotornabe variiert wird.

4. Verfahren nach einem der vorhergehenden Ansprüche, wobei das Magnetfeld (26) radial nach innen auf das Dämpfungselement (18) wirkt.

5. Verfahren nach einem der Ansprüche 1 bis 4, wobei das Magnetfeld (26) radial nach außen auf das Dämpfungselement (18) wirkt.

6. Verfahren nach einem der vorhergehenden Ansprüche, wobei das Magnetfeld (26) mit dem Dämpfungselement (18) mit rotiert.

7. Verfahren nach einem der Ansprüche 1 bis 5, wobei das Magnetfeld (26) lagefixiert wird.

8. Verfahren nach einem der vorhergehenden Ansprüche, wobei bei einer toleranzbehafteten Einspannung der Schaufel (1) in einer Schaufelaufnahme das Dämpfungselement (18) nahe der Schaufelaufnahme angeordnet wird.

9. Dämpfungseinrichtung (2) zur Schwingungsdämpfung zumindest einer Schaufel (1) mit einer kleineren Permeabilitätszahl (µ_{rB}) einer Strömungsmaschine, insbesondere zur Durchführung eines Verfahrens nach einem der vorhergehenden Ansprüche, mit zumindest einem Dämpfungselement (18) mit einer großen Permeabilitätszahl (µ_{rD}) zur in Axialrichtung bewegbaren Anordnung an der Schaufel (1), und mit zumindest einer Magnetfeldquelle (20) zur Erzeugung einer auf das Dämpfungselement (18) in Radialrichtung wirkenden Anpresskraft.

10. Dämpfungseinrichtung nach Anspruch 9, wobei die Magnetfeldquelle (20) ein Ringmagnet ist.

11. Strömungsmaschine mit einer Dämpfungseinrichtung (1) nach Anspruch 9 oder 10, wobei Schaufeln (1) zumindest einer Schaufelreihe mit jeweils einem der Dämpfungselemente (18) versehen sind und nabenseitig oder gehäuseseitig eine Magnetfeldquelle (16) angeordnet ist.
